(19) Europäisches Patentamt
European Patent Office
Office européen des brevets

(11) **EP 4 480 744 A1**

(12) **EUROPEAN PATENT APPLICATION**

(43) Date of publication:
**25.12.2024   Bulletin 2024/52**

(51) International Patent Classification (IPC):
**B60L 58/19** (2019.01)     **B60L 58/21** (2019.01)
**B60L 58/22** (2019.01)

(21) Application number: **23180456.8**

(22) Date of filing: **20.06.2023**

(52) Cooperative Patent Classification (CPC):
**B60L 58/21; B60L 58/19; B60L 58/22;**
B60L 2240/547; B60L 2240/549

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Polestar Performance AB**
**405 31 Gothenburg (SE)**

(72) Inventor: **KLINTBERG, Anton**
**423 63 Torslanda (SE)**

(74) Representative: **Zacco Sweden AB**
**P.O. Box 5581**
**Löjtnantsgatan 21**
**114 85 Stockholm (SE)**

(54) **POWER MANAGEMENT IN A BATTERY PACK**

(57) The present disclosure relates to methods, systems, a vehicle and a computer-readable storage medium and a computer program product. The method of optimizing power delivery in an electricity distribution system of a vehicle comprises estimating a parameter associated with battery strings of a battery pack. The method further comprises determining a respective loss function for load power values, provided by string-power combinations of the battery strings, based at least partly on determined one or more discrete first and second string power values and their corresponding operating voltage values.

Fig. 1

**EP 4 480 744 A1**

**Description**

TECHNICAL FIELD

The disclosed technology relates to methods and systems for monitoring and controlling battery modules, including those integrated into electric vehicles, and more particularly to monitoring and controlling the efficiency of DC/DC converters. In particular, but not exclusively the aspects and embodiments of the disclosed technology relate to power management and optimizing power delivery in an electricity distribution system of a vehicle comprising battery modules.

BACKGROUND

The transport sector accounts for high greenhouse gas emissions globally and is therefore considered to be a major source of air pollution. To address the issue of climate change and enhance energy security, the key is to bring about a fundamental shift from the fossil-fuel dependent vehicles to electric vehicles (EVs) in the market.

Electric and hybrid vehicles are becoming increasingly popular as consumers look to decrease their environmental impact and improve air quality. Instead of a traditional internal combustion engine, electric and hybrid vehicles include one or more motors powered by a rechargeable battery pack, for example known as rechargeable energy storage systems (REESS). Most rechargeable battery packs are made up of a plurality of individual battery cells configured to provide electrical power to the one or more motors, known as battery modules. Based on power requirements and consumer demand, rechargeable battery packs have tended towards higher operating voltages. For example, based on Ohm's law (e.g., $P=V2/R$), doubling the voltage of the rechargeable battery pack approximately quadruples the power output (assuming a similar resistance of the one or more motors). Whereas battery packs for electric vehicles traditionally tended to be in the 200-400 V range, newer electric vehicles may include high voltage battery systems with outputs much higher, around 800 V, so that a motor having equivalent internal resistance will output much higher power levels.

Within a hybrid or electric vehicle, a power supply may be modified by an electricity distribution system to deliver the appropriate voltage to each component. Such vehicles have conventionally included two separate battery subsystems. The first of these is intended for operating the drivetrain, sometimes referred to as a "traction battery," and is configured to produce a high voltage (typically at least several hundred volts). The second battery is then configured for operating cabin accessories, climate control, and in the case of hybrid vehicles, the starter for the internal combustion engine. The second battery system produces an output that is at a significantly lower voltage level than the first battery. For example, the second battery may be operated at between approximately 5V and 20V or between 5V and 50V such as 48V while the first battery subsystem may be operated at several hundred to a few thousand volts in a typical case.

As a result of the division of responsibilities between the high voltage system and low voltage system, there is a present need for improved integration and balance between power distribution of the high voltage system and low voltage system in the battery pack of the vehicles.

SUMMARY

The herein disclosed technology seeks to mitigate, alleviate or eliminate one or more of the above-identified deficiencies and disadvantages in the prior art to address various problems relating to power delivery and distribution in a battery pack.

Various aspects and embodiments of the disclosed invention are defined below and in the accompanying independent and dependent claims. More specifically, various embodiments disclosed herein relate to systems and methods for monitoring and controlling battery modules, and more particularly to monitoring and controlling the efficiency of DC/DC converters controlling power distribution between strings of the high voltage and low voltage system within electric vehicles. The term exemplary is in the present context to be understood as serving as an instance, example or illustration.

According to a first aspect of the present disclosure, there is provided a method. The computer-implemented method is disclosed for optimizing power delivery in an electricity distribution system of a vehicle. The electricity distribution system comprises a battery pack comprising a first battery string and a second battery string each having a respective operating voltage. The method comprises estimating a parameter associated with each of the first and the second battery string. The method further comprises discretizing a respective first string power provided by the first battery string over a predetermined range of a load power value to be provided to one or more first loads, configured to operate at a respective load operating voltage; thereby determining one or more discrete first string power values. Further, the method comprises determining a corresponding operating voltage value for each discrete first string power value, based at least partly on the estimated at least one parameter associated with the first battery string. Additionally, the method comprises determining one or more second string power values and a corresponding operating voltage value for each second string power value provided by the second battery string based at least partly on the determined one or more discrete first string power values and their corresponding operating voltage values. For each string-power combination comprised in one or more string-power combinations of the determined one or more discrete first and second string power values fulfilling a predetermined criteria, the method further comprises determining a respective loss function for the load power value, provided by that string-power combination, based at least partly on the determined one or more discrete first and second string power values and their corresponding operating voltage values. The method further comprises comparing the determined respective loss functions for the one or more string-power combinations and selecting a string-power combination of the one or more string-power combinations having the smallest loss function value. Further, the method comprises providing, to the one or more first loads, the load power value provided by the selected string-power combination.

In several embodiments, the method may further comprise estimating the parameter associated with each of the first and the second battery string by estimating respective resistances for each of the first and the second battery strings. Additionally or alternatively, the method may further comprise estimating the parameter associated with each of the first and the second battery string by estimating a slowly-changing voltage parameter of the respective operating voltages for each of the first and the second battery strings.

In several embodiments, each of the first and the second battery strings may comprise one or more battery cells. Estimating respective resistances for each of the first and the second battery strings may comprise estimating a respective resistance of each battery cell comprised in each of the first and the second battery strings and determining a sum of the estimated resistances of the one or more battery cells for each battery string. The method may further comprise estimating the slowly-changing voltage parameters for the first and the second battery strings based on the estimated resistances of the first and the second battery strings and a propulsion battery current of the battery pack.

In some embodiments, the corresponding operating voltage value for each discrete first string power value may be determined based further on the propulsion battery current of the battery pack.

In several embodiments, the electricity distribution system may further comprise a dual DC/DC converter arranged in connection with the first and the second battery strings and configured to control a flow of string power from the first and the second battery strings provided at least to the one or more first loads. The method may further comprise determining the one or more second string power values and the corresponding operating voltage value for each second string power value based further on the estimated at least one parameter associated with the second battery string, an efficiency parameter of the dual DC/DC converter, and a propulsion battery current of the battery pack.

The present inventor has realized that power management according to various aspects and embodiments of the present disclosure can be accomplished in a way that minimizes power loss between battery strings and the high/low voltage systems (in an energy optimal manner) and balances the state of the charge level.

In several embodiments, the predetermined criteria to be fulfilled for the one or more string-power combinations of the determined one or more discrete first and second string power values may comprise one or more constraints of the electricity distribution system configured for at least balancing a state of charge of the first and the second battery strings.

In several exemplary embodiments, the one or more constraints of the electricity distribution system may comprise a respective battery capacity of the first and the second battery strings, a respective operating state of charge of the first and the second battery strings, and a respective minimum state of charge of the first and the second battery strings corresponding to a fully discharged state of the first and the second battery strings.

In several embodiments, the method may further comprise, determining the respective loss function for the load power value based further on the estimated at least one parameter associated with the first and the second battery string, the efficiency parameter of the dual DC/DC converter, and the propulsion battery current of the battery pack.

According to a second aspect of the present disclosure there is provided a (non-transitory) computer-readable storage medium comprising instructions which, when executed by one or more processors of a computing device of a vehicle comprising an electricity distribution system, causes the computing device to carry out the method according to any one of the embodiments of the method disclosed herein.

According to a third aspect of the present disclosure, there is provided a computer program product comprising instructions which, when the program is executed by one or more processors of a computing device of a vehicle comprising an electricity distribution system, causes the computing device to carry out the method according to any one of the embodiments of the method disclosed herein.

According to a further fourth aspect, there is provided an electricity distribution system for a vehicle. The electricity distribution system comprises a battery pack comprising a first battery string and a second battery string each having a respective operating voltage. The system further comprises processing circuitry configured for estimating a parameter associated with each of the first and the second battery string. The processing circuitry is further configured for discretizing a respective first string power provided by the first battery string over a predetermined range of a load power value to be provided to one or more first loads, configured to operate at a respective load operating voltage; and thereby determining one or more discrete first string power values. Further, the processing circuitry is configured for determining a corresponding operating voltage value for each discrete first string power value, based at least partly on the estimated at least one parameter associated with the first battery string. The processing circuitry is further configured for determining one or more second string power values and a corresponding operating voltage value for each second string power value provided by the second battery string based at least partly on the determined one or more discrete first string power values and their corresponding operating voltage values. For each string-power combination comprised in one or more string-power combinations of the determined one or more discrete first and second string power values fulfilling a predetermined criteria, the processing circuitry is configured for determining a respective loss function for the load power value, provided by that string-power combination, based at least partly on the determined one or more discrete first and second string power values and their corresponding operating voltage values. The processing circuitry is further configured for comparing the determined respective loss functions for the one or more string-power combinations and selecting a string-power combination of the one or more string-power combinations having the smallest loss function value. Further, the processing circuitry is configured for providing, to the one or more first loads, the load power value provided by the selected string-power combination.

In several embodiments, the processing circuitry may be further configured for estimating the parameter associated with each of the first and the second battery string by estimating respective resistances for each of the first and the second battery strings. Additionally or alternatively, the processing circuitry may be further configured for estimating the parameter associated with each of the first and the second battery string by estimating a slowly-changing voltage parameter of the respective operating voltages for each of the first and the second battery strings.

In several embodiments, each of the first and the second battery strings may comprise one or more battery cells. The processing circuitry may further be configured for estimating respective resistances for each of the first and the second battery strings by estimating a respective resistance of each battery cell comprised in each of the first and the second battery strings and determining a sum of the estimated resistances of the one or more battery cells for each battery string. The processing circuitry may further be configured for estimating the slowly-changing voltage parameters for the first and the second battery strings based on the estimated resistances of the first and the second battery strings and a propulsion battery current of the battery pack.

In several embodiments, the corresponding operating voltage value for each discrete first string power value may be determined based further on the propulsion battery current of the battery pack.

In several embodiments, the predetermined criteria to be fulfilled for the one or more string-power combinations of the determined one or more discrete first and second string power values may comprise one or more constraints of the electricity distribution system configured for at least balancing a state of charge of the first and the second battery strings.

In several embodiments, the one or more constraints of the electricity distribution system may comprise a respective battery capacity of the first and the second battery strings, a respective operating state of charge of the first and the second battery strings, and a respective minimum state of charge of the first and the second battery strings corresponding to a fully discharged state of the first and the second battery strings.

In several embodiments, the processing circuitry may further be configured for determining the respective loss function for the load power value based further on the estimated at least one parameter associated with the first and the second battery string, the efficiency parameter of the dual DC/DC converter, and the propulsion battery current of the battery pack.

According to yet another fifth aspect, there is provided a vehicle comprising an electricity distribution system according to any one of embodiments of the electricity distribution system according to the fourth aspect as disclosed herein.

Further embodiments of the different aspects are defined in the dependent claims.

It is to be noted that all the embodiments, elements, features and advantages associated with the first aspect also analogously apply to the second, third, fourth and the fifth aspects of the present disclosure.

These and other features and advantages of the present disclosure will in the following be further clarified in the following detailed description.

BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings. The drawings are not to scale.

Fig. 1 illustrates a schematic block diagram of a of a power management system for vehicles, in accordance with several embodiments of the present disclosure.

Fig. 2 illustrates a schematic diagram depicting an exemplary power management system for a vehicle with a switched battery pack utilizing a dual DC/DC converter, in accordance with several embodiments of the present disclosure.

Fig. 3 shows a schematic flowchart illustrating a method in accordance with several embodiments of the present disclosure.

Fig. 4 shows a schematic illustration of a vehicle comprising an electricity distribution system and a control system in accordance with some embodiments of the present disclosure.

## DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person.

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth. As used herein, the term "if" may be construed to mean "when or "upon" or "in an instance of" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

Throughout the specification, and in the claims, the term "connected" means a direct electrical, mechanical, or magnetic connection between the things that are connected, without any intermediary devices. The terms "coupled" or "integrated" mean either a direct electrical, mechanical, or magnetic connection between the things that are connected or an indirect connection through one or more passive or active intermediary devices. The term "circuit," "module," or "mechanism" may refer to one or more passive and/or active components that are arranged to cooperate with one another to provide a desired function.

The terms "substantially," "close," "approximately," "near," and "about" generally refer to being within +/-10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking, or in any other manner.

In the following description of exemplary embodiments, the same reference numerals denote the same or similar components.

As used herein, a "vehicle" is any form of motorized transport. For example, the vehicle may be any road vehicle such as a car (as illustrated herein), a motorcycle, a (cargo) truck, a bus, etc. The vehicle may be an electrical vehicle (EV) or a hybrid vehicle equipped with a battery pack.

Throughout this application, some terms are used to refer to voltage levels that are consistent with present-day electric vehicles. For example, "low voltage" is used to refer to the voltage levels typically used to power accessories like speakers, console displays, door locks, window motors, defroster wires, fans, seat heaters, wired and wireless rechargers and outlets, and the like. "Low voltage," as used throughout this application, typically refers to anything at or under 230V (i.e., European standard operating voltage), but more at 12V (standard accessory operating bus voltage) or even 5V (used for systems such as phone chargers and other similarly-sized electronics).

Finally, "high voltage" refers to the voltage levels that are beginning to be used in modern all-electric drivetrains. These vastly exceed the low-range voltages, recognizing that the power output of the same electric motor increases substantially exponentially with increased input voltage. Such high voltage systems may be used in production of next-generation vehicles.

Generally speaking, for the purposes of this application and subject to the details above, it can be assumed that "low voltage" is equal to or less than 200V and "high voltage" refers to voltages at or above 400V. However, it should be understood that in future the operating voltages of electrical vehicles may increase. This is due to the expected increases in nominal power output and energy storage within battery packs, as well as the incentive to increase operating voltage described above for purposes of power output. Therefore, it is fully expected that in the future, "high voltage" in the electrical vehicle context could reach much higher, such as thousands of volts.

In embodiments, the high voltage and low voltage subsystems may be integrated to provide power to the entirety of the vehicle. The high voltage battery system (the traction battery), in addition to providing traction power, may also be relied upon to provide power to the vehicle's low voltage system. Conventionally, this power transfer (transferring power from the traction battery between the high voltage system and the low voltage system) is controlled by a single DC/DC converter. However, sometimes an alternative arrangement may be used that offers more control flexibility according to the present disclosure.

The voltage range of a vehicle battery can be increased by equipping the battery pack with a few extra relays such that the battery pack can be reconfigured into two parallel strings. By doing this, the voltage over the battery pack is halved, compared to when all cells were connected in series. This arrangement is desirable as the consequence permits use of charging stations with lower voltages. However, there are also some implications of the DC/DC converter that controls the power to the low voltage system.

The present inventor has realized that power management according to various aspects and embodiments of the present disclosure can be accomplished in a way that minimizes power loss between battery strings and the high/low voltage systems (in an energy optimal manner) and balances the state of the charge level.

Further, the present inventor has realized that to be able to provide power to the low voltage system with a switched battery pack, a dual DC/DC converter may be used according to the embodiments herein. The dual DC/DC converter has the capability to provide different voltage levels simultaneously or independently. For example, a dual-output DC/DC converter may have two separate output terminals, each providing a different voltage level. On the high voltage side, there may be two converters that are each connected over a single string. However, the converters may be connected to the same iron core, which means the low voltage side will be shared. With a parallelized configuration as described herein, it is possible to select how much power that may be drawn from each battery string.

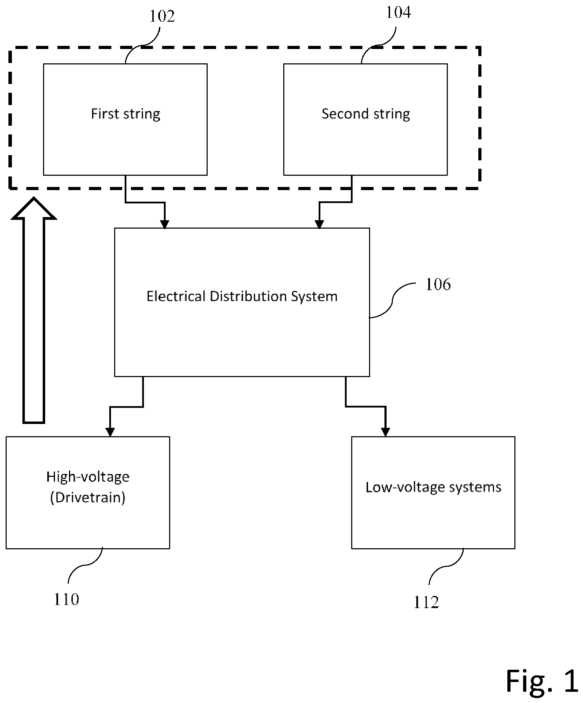

As shown in FIG. 1, an electricity distribution system 106 of a vehicle comprises a battery pack comprising a first battery string 102 and a second battery string 104 each having a respective operating voltage. The electricity distribution system 106 may also be referred to as the power management system 106 or electrical distribution system 106 throughout this description. The first string of cells 102 and the second string of cells 104 each provide power to the power management system 106. Power management system 106 can provide power to high voltage loads 110 (e.g., a drivetrain) and low voltage systems 112, simultaneously. In embodiments, during normal operation, high voltage system 110 and the low voltage system 112 may receive power from both a first string 102 and second string 104 that is routed through power management system 106. In embodiments, power management system 106 can combine the voltages of the first string 102 and the second string 104 to provide a higher voltage to the high voltage system 110. For example, in one embodiment the first string 102 and the second string 104 can each provide approximately 400V power output and high voltage system 110 may receive approximately 800V power supplied by the power management system 106. It should be understood that in other embodiments the power management system 106 could provide some other voltage to the high voltage system, and the two strings 102 and 104 may not necessarily have identical voltage outputs.

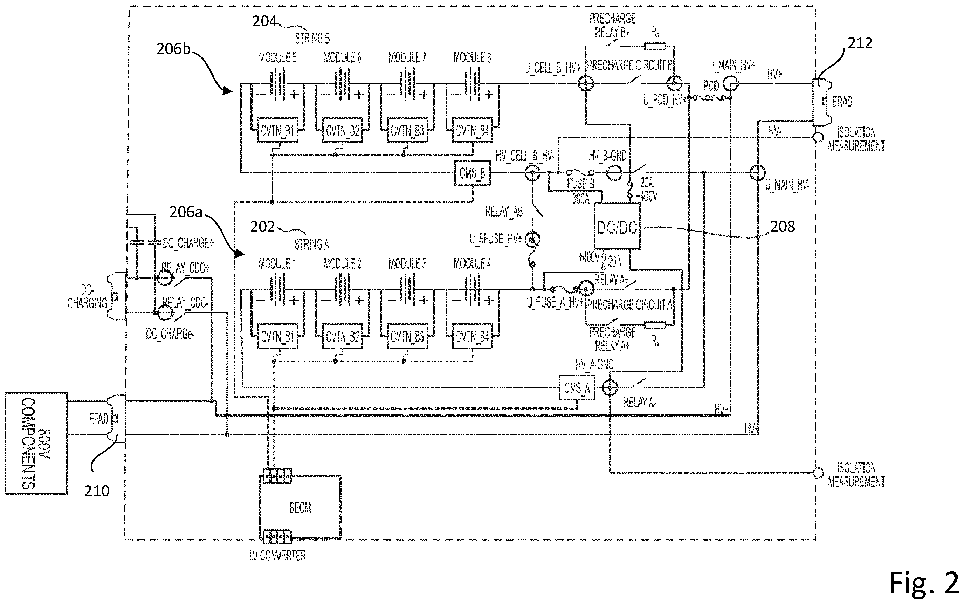

FIG. 2 illustrates a schematic diagram depicting an exemplary power management system (electricity distribution system 106) for an electric vehicle 1 with a switched battery pack utilizing a dual DC/DC converter, according to embodiments. The depicted electrical distribution system 106 in FIG. 2 is evidently an example to elucidate various aspects and embodiments of the present disclosure and the skilled person in the art is well aware that the presented methods herein can be advantageously applied to other power management systems than the example of FIG. 2.

FIG. 2 depicts a first string 202, a second string 204, each of which may include a number of modules/power supplies 206a and 206b (conventionally depicted) arranged in series. In modern battery architectures, each module, could be 100V. In embodiments depicted, four modules are depicted for each string in which the first battery string 202 and the second battery string 204 may each have a net output of approximately 400V. The modules 1 - 4 are depicted to be comprised in the module series 206a, and the modules 5 - 8 are depicted to be comprised in the module series 206b. Each of the modules may comprise battery cells which may also be connected in series. In alternative embodiments, each module may have an alternative number of modules or a different voltage, which may be utilized in each of the first and second battery strings 202 and 204 to result in a different net output voltage.

A dual DC/DC converter 208 may be utilized to create low-voltage output from the power generated from the modules 206a-b between the first and second strings 202 and 204. The dual DC/DC converter 208 can be powered to produce an approximate 12V output to the low voltage system. In embodiments, an electric front axle drive (EFAD) 210 and an electric rear axle drive (ERAD) 212 is illustrated. Each of the EFAD 210 and ERAD 212 may be utilized for propulsion. Meaning, power may be routed to the front of a vehicle and the back of the vehicle at EFAD 210 and ERAD 212, respectively, utilized to move the vehicle. The EFAD 210 and the ERAD 212 may be configured to operate at high voltage. In embodiments, should 2-wheel drive be engaged, either of the EFAD 210 or the ERAD 212 may be omitted. In currently illustrated FIG. 2, where each module is operating at 100V, the EFAD 210 and ERAD 212 may operate at 800V.

In alternative embodiments, additional (or fewer) modules, battery strings, or voltages within each module may be realized, in which the EFAD 210, ERAD 212 and low voltage system may operate at even higher (or lower) voltages corresponding to the sum of the operating voltage of each module among each string and the dual DC/DC converter.

Each of the first battery string 202 and the second battery string 204 may be separately, electrically coupled to DC/DC converter 208. Similarly, each of the first battery string 202 and the second battery string 204 may be electrically coupled to the EFAD 210 and other 800V components, as well as the ERAD 212. In sum, each of the dual DC/DC converter 208, the EFAD 210, the ERAD 212, and the high voltage components may be coupled to both of the battery strings 202 and 204. However, the dual DC/DC converter 208 may receive power from both strings at separate inputs, whereas the other components 210, 212, and may receive power from both battery strings 202 and 204 at a common input. Because of the manner in which the connections are made, the voltage at the EFAD 210 and the ERAD 212 may be substantially equal to the sum of the output voltages of the strings (202, 204).

In order for balanced power distribution between the high voltage system and low voltage system (i.e., always providing power to the low voltage system), a control method for the dual DC/DC converter (as discussed below) may be desirable.

The efficiency of DC/DC converters is dependent on their operating point. In several embodiments, for the dual DC/DC converter 208, based on the converter efficiencies, power flow can be written as a simple expression:

$$p = \eta(v_1, p_1) \cdot p_1 + \eta(v_2, p_2) \cdot p_2, \tag{1}$$

where p is the power to the low voltage system, $p_1$ and $p_2$ are the power from the two battery strings respectively, $\eta$ is the efficiency of the converter, and $v_1$ and $v_2$ are the voltage over the two battery strings. Straightforwardly, the losses in the converters can be expressed as:

$$p_{\text{loss,DCDC}} = \left(1 - \eta(v_1, p_1)\right) \cdot p_1 + \left(1 - \eta(v_2, p_2)\right) \cdot p_2. \tag{2}$$

From equations (1) and (2), it can be understood that the power to the low voltage system is affected by the voltage over the battery stings 102, 104; 202, 204. Moreover, as will be shown, the voltage over the battery strings will also be dependent on the power to the low voltage system.

Since the DC/DC converter can control the power flow rapidly, a simple non-dynamic battery model may be used. The battery voltage may then be divided into two parts. A first part that reacts instantly to a change in the input and a second that reacts slowly. By assuming that the slowly changing voltage is constant between successive time steps, the voltage over the battery strings can be modelled as:

$$v_1 = v_{1,\text{slow}} + R_1 \cdot (i + i_1) \tag{3a}$$

$$v_2 = v_{2,\text{slow}} + R_2 \cdot (i + i_2), \tag{3b}$$

where $v_{1,\text{slow}}$ and $v_{2,\text{slow}}$ are the slowly changing voltages, $R_1$ and $R_2$ are ohmic resistance of the battery strings, $i$ is the propulsion battery current, and $i_1$ and $i_2$ are the currents going to the converters. To get the same input as in (1) and (2), (3) is multiplied with the string voltage, which results in:

$$v_1^2 = v_1\left(v_{1,\text{slow}} + R_1 \cdot i\right) + R_1 \cdot p_1 \tag{4a}$$

$$v_2^2 = v_2\left(v_{2,\text{slow}} + R_2 \cdot i\right) + R_2 \cdot p_2. \tag{4b}$$

A slowly changing voltage in a battery pack in the present context may refer to a gradual change in the voltage output of the battery over time, typically due to factors such as the battery's age, usage, and environmental conditions. This slow change in voltage can be indicative of the battery's overall health and can affect its performance and ability to hold a charge. For example, as a battery ages, the chemical reactions that occur inside it can lead to a gradual decrease in its voltage output. Similarly, if a battery is exposed to extreme temperatures or is used frequently, this can cause changes in the voltage output that can affect the battery's overall performance. Slow-changing voltage in the present context can also be understood as everything that does not change instantly with a change in the current i.e. the parameters that will stay approximately the same in successive time steps, such as voltage originated by state of charge and/or ion diffusion.. This can help to prevent unexpected downtime or damage to equipment that relies on the battery for power. On the contrary, an instantaneous voltage of the battery pack, also known as ohmic voltage directly proportional to the current in the present context may refer to the voltage measured at a specific moment in time. It can fluctuate quickly in response to changes in the load or other external factors. Instantaneous voltage can be affected by factors such as the current draw of the load, temperature, and the battery's state of charge.

Continuing from equations (4a) and (4b), solving for the string voltages provides:

$$v_1 = \frac{v_{1,slow}+R_1 \cdot i}{2} + \sqrt{\left(\frac{v_{1,slow}+R_1 \cdot i}{2}\right)^2 + R_1 \cdot p_1} \qquad (5a)$$

$$v_2 = \frac{v_{2,slow}+R_2 \cdot i}{2} + \sqrt{\left(\frac{v_{2,slow}+R_2 \cdot i}{2}\right)^2 + R_2 \cdot p_2}. \qquad (5b)$$

For later use, an expression for the battery losses that are originated by $p_1$ and $p_2$ are derived below:

$$p_{\text{loss,bat}} = R_1 \cdot \left(i + \frac{p_1}{v_1}\right)^2 + R_2 \cdot \left(i + \frac{p_2}{v_2}\right)^2 - (R_1 + R_2) \cdot i^2, \qquad (6)$$

The number of ampere seconds until the strings are empty is expressed:

$$Q_{empty,1} = (z_1 - z_{min}) \cdot Q_1 \qquad (7a)$$

$$Q_{empty,2} = (z_2 - z_{min}) \cdot Q_2, \qquad (7b)$$

While many calculations above may only be valid when the battery strings are connected in series, similar expressions for parallel connections may be derived.

The resistance of each cell may be estimated utilizing another function. Therefore, the estimated cell resistances of each string may be summed to get the resistance of the strings as expressed:

$$\hat{R}_1 = \sum_{j=1}^{n_1} \hat{R}_{0,j} \qquad (8a)$$

$$\hat{R}_2 = \sum_{j=n_1+1}^{n} \hat{R}_{0,j}, \qquad (8b)$$

where n is the number of cells in the battery. For notational simplicity, it can be assumed that the first $n_1$ cells are placed in the first string and that the last n - $n_1$ cells are placed in the second string. The slowly changing voltages can then be estimated as:

$$\hat{v}_{1,\text{slow}}^+ = v_1 - \hat{R}_1 \cdot (i + i_1) \qquad (9a)$$

$$\hat{v}_{2,\text{slow}}^+ = v_2 - \hat{R}_2 \cdot (i + i_2), \qquad (9b)$$

where $v_1$, $v_2$ i, $i_1$, and $i_2$ are measured, and the "+" is indicating that there is a time difference between the estimated voltage and $\hat{R}_1$, $\hat{R}_2$, $v_1$, $v_2$ i, $i_1$, and $i_2$.

A method that minimizes the losses and, simultaneously, balances the state of charge of the two battery strings may be formulated. The losses, that will be minimized, are the sum of the losses in the converter and the battery, expressed as:

$$p_{\text{loss}} = \underbrace{\left(1 - \eta(v_1, p_1)\right) \cdot p_1 + \left(1 - \eta(v_2, p_2)\right) \cdot p_2}_{\text{Converter losses}} +$$

$$\underbrace{R_1 \cdot \left(i + \frac{p_1}{v_1}\right)^2 + R_2 \cdot \left(i + \frac{p_2}{v_2}\right)^2 - (R_1 + R_2) \cdot i^2}_{\text{Battery losses}}. \qquad (10)$$

Next, the control method can be illustrated below, which may be implicitly defined by an optimization problem. Following expression of the control method, the formulation shall be described. The optimization problem may be expressed as:

$$\text{Minimize} \qquad p_{\text{loss}} \qquad\qquad\qquad (11a)$$

$$\text{Subject to} \qquad p = \eta(v_1, p_1) \cdot p_1 + \eta(v_2, p_2) \cdot p_2 \qquad\qquad (11b)$$

$$v_1 = \frac{v_{1,\text{slow}} + R_1 \cdot i}{2} + \sqrt{\left(\frac{v_{1,\text{slow}} + R_1 \cdot i}{2}\right)^2 + R_1 \cdot p_1} \qquad (11c)$$

$$v_2 = \frac{v_{2,\text{slow}} + R_2 \cdot i}{2} + \sqrt{\left(\frac{v_{2,\text{slow}} + R_2 \cdot i}{2}\right)^2 + R_2 \cdot p_2} \qquad (11d)$$

$$\frac{p_1}{v_1} > \frac{p_2}{v_2}, \qquad\qquad \text{if} \ \ (z_1 - z_{min}) \cdot Q_1 > (z_2 - z_{min}) \cdot Q_2 \qquad (11e)$$

$$\frac{p_1}{v_1} < \frac{p_2}{v_2}, \qquad\qquad \text{if} \ \ (z_1 - z_{min}) \cdot Q_1 < (z_2 - z_{min}) \cdot Q_2. \qquad (11f)$$

The objective is to find $p_1$ and $p_2$ such that the power losses are minimized, (11a), and the constraints, (11b)-(11f), are respected. Variables in functions (11b)-(11d) may be directly provided by the system itself (see section A-B for details), while variables in functions (11e) and (11f) may be selected to avoid control signals that originate imbalance between the strings. It should be noted that the estimation in function (9) is performed one time step before the functions (11c, 11d). Since the slow-changing voltage is changing very slowly compared to sampling, it is assumed that it will be the same in the succeeding time step.

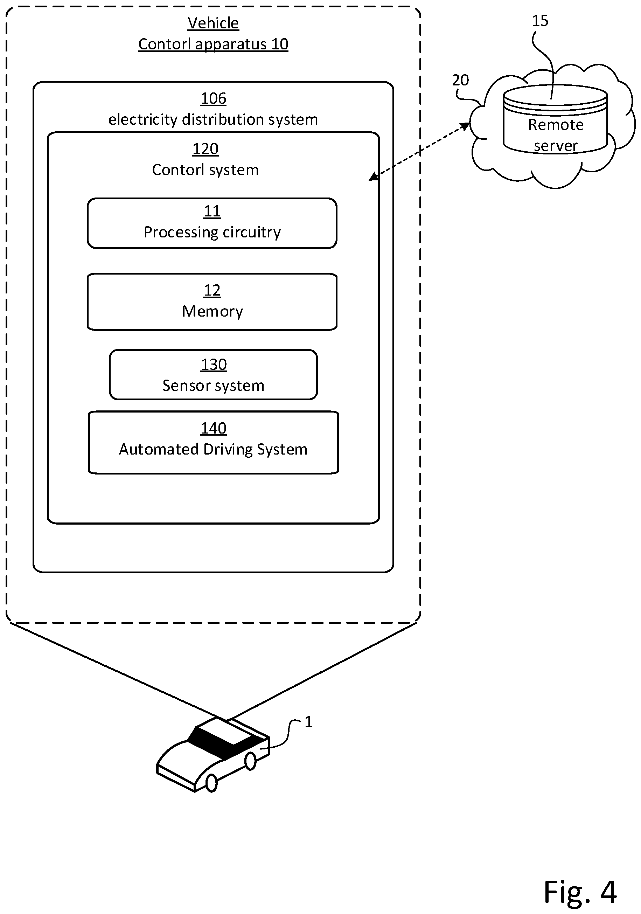

In several embodiments and aspects herein as shown in FIG. 4, the vehicle 1 may comprise the electricity distribution system 106. The electricity distribution system 106 as shown in FIG. 4 comprises processing circuitry 11 configured for optimizing power distribution between the strings 102, 104; 202, 204 of the high voltage system 110 and the low voltage system 112. In several embodiments, the electricity distribution system 106 comprises a control system 120, otherwise referred to as a controller 120, wherein the controller 120 comprises the processing circuitry 11. In several embodiments, the control system 120 may further comprise a memory 12. The processing circuitry 11 may comprise one or more processors that may be configured to execute program code stored in the memory 12, in order to carry out various functions and operations of the electricity distribution system 106 in addition to the methods disclosed herein. The processor(s) may be or include any number of hardware components for conducting data or signal processing or for executing computer code stored in the memory. The memory optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory may include database components, object code components, script components, or any other type of information structure for supporting the various activities of the present description. Various aspects and embodiments of the presented technology, and the corresponding systems and methods may be implemented and executed by means of processing circuitry comprising one or more processors. The processing circuitry may at least partly be comprised in the control system 120 or apparatus 10 implemented in the vehicle 1. In some embodiments, the control system 120 and processing circuitry may be a decentralized system and be implemented in a remote server 15 in communication with the vehicle 1 e.g. via external cloud networks 20 or other communication networks 20.

The controller 120 is configured to operate the power management system 106 by communicating with the other components of the system 106. When the first string 102; 202 and the second string 104; 204 provide power to the low voltage system 112, the controller 120 of the electricity distribution system 106 processes the signal (and corresponding information) to optimize and balance power transfer between the first string 102; 202 and the second string 104; 204. This optimization problem, function (11a-11f), is nonlinear and therefore, may not be solved analytically. However, it can be solved numerically in numerous ways. In embodiments herein, a method that can be calibrated to get a solution arbitrary close to the optimal solution is presented.

In several embodiments and aspect, the vehicle 1 or the electrical distribution system 106 may comprise a sensor system 130. The sensor system 130 may be configured for providing measurements and detecting various operations of different parts and components of the vehicle 1 or the electrical distribution system 106. Several parameters across the first and second batter strings 102, 104; 202, 204 as well as the low- or high-voltage systems such as voltage, current or power, etc. may be measured by respective sensor devices comprised in the sensor system 130 and utilized in performing several aspects and embodiments of the methods herein.

In several aspects and embodiments, the vehicle 1 may comprise an Automated Driving System, ADS 140. In several aspects and embodiments, the methods herein may be performed by the ADS 140 being comprised in or in communication with the control system 106, 120 of the vehicle 1 comprising processing circuitry 11 configured for performing the various embodiments and steps of the method. In several aspects and embodiments, the method may be performed by a control system of the server 15 or data center comprising processing circuitry configured for performing the various embodiments and steps of the method. For non-limiting simplicity reasons only, in the rest of the description the processing circuitry 11 of the control system 106, 120 will be used to describe performing several aspects and embodiments of methods herein instead of using the power management system 106 or control system 120 repetitively.

In several aspects and embodiments, the processing circuitry 11 is configured for estimating a parameter associated with each of the first 102; 202 and the second 104; 204 battery string. In several embodiments, the processing circuitry 11 is configured for estimating the parameter associated with each of the first and the second battery string by estimating respective resistances (e.g., $\hat{R}_1$ and $\hat{R}_2$,) for each of the first 102 and the second 104 battery strings. Additionally or alternatively, the processing circuitry is configured for estimating a slowly-changing voltage parameter (e.g., $\hat{v}^+_{1,\text{slow}}$ and $\hat{v}^+_{2,\text{slow}}$ ) of the respective operating voltages for each of the first 102 and the second 104 battery strings.

The processing circuitry 11 is further configured for discretizing a respective first string power $p_1$ provided by the first battery string 102 over a predetermined range of a load power value p to be provided to one or more first loads 110, 112 i.e. low-voltage or high-voltage systems, configured to operate at a respective load operating voltage. The processing circuitry is accordingly configured for determining one or more discrete first string power values. Furthermore, the processing circuitry 11 is configured for determining a corresponding operating voltage value for each discrete first string power value, based at least partly on the estimated at least one parameter associated with the first battery string as mentioned above. In other words, the respective first string power $p_1$ is discretized such that the entire range of load power value $p$ is covered and corresponding voltage values $v_1$ over the first string 102; 202 are calculated by means of equation 11c as previously explained. Stated differently, the low voltage system 112 is supplied with the same power as is consumed by low voltage loads (to avoid cycle the low voltage battery). The range is then swept by all operating points between all load power provided from the first string (and none from the second string) to all power provided from the second string (and none from the first string).

As previously mentioned, each of the first 102; 202 and the second 104; 204 battery strings may comprise one or more battery cells (which may be comprised in the modules 206a-b). Accordingly, estimating respective resistances for each of the first and the second battery strings may comprise estimating a respective resistance of each battery cell comprised in each of the first and the second battery strings. Further, estimating respective resistances for each of the first and the second battery strings may comprise determining a sum of the estimated resistances of the one or more battery cells for each battery string. In several embodiments and aspects herein, the processing circuitry 11 may further be configured for estimating the slowly-changing voltage parameters for the first 102; 202 and the second 104; 204 battery strings based on the estimated resistances of the first and the second battery strings and a propulsion battery current of the battery pack.

Even further, in some embodiments the corresponding operating voltage value $v_1$ for each discrete first string 102; 202 power value $p_1$ may further be determined based on the propulsion battery current of the battery pack.

In several embodiments herein, the processing circuitry 11 may be configure for determining one or more second string 104; 204 power values $p_2$ and a corresponding operating voltage value $v_2$ for each second string power value $p_2$ provided by the second battery string based at least partly on the determined one or more discrete first string power values and their corresponding operating voltage values.

In several embodiments and aspects herein, the dual DC/DC converter 208 may be arranged in connection with the first 102; 202 and the second 104; 204 battery strings as mentioned earlier with reference to FIG. 2. The dual DC/DC converter 208 may be configured to control a flow of string power from the first and the second battery strings provided at least to the one or more first and/or second loads 110, 112.

The processing circuitry 11 may be further configured for determining the one or more second string power values $p_2$ and the corresponding operating voltage value $v_2$ for each second string power value $p_2$ based further on the estimated at least one parameter associated with the second battery string, an efficiency parameter of the dual DC/DC converter, and the propulsion battery current of the battery pack as also described with reference to functions (11b) and (11d).

Based on the determined one or more discrete first and second string power values for each respective battery string, one or more battery string-respective power (string-power) combinations can be formed. Some of the string-power combinations comprised in one or more string-power combinations may fulfil a predetermined criteria. In various aspects and embodiments, for each string-power combination comprised in one or more string-power combinations of the determined one or more discrete first and second string power values fulfilling a predetermined criteria the processing circuitry is further configured for determining a respective loss function for the load power value $p$, provided by that string-power combination. This respective loss function for the load power value p is formed based at least partly on the determined one or more discrete first and second string power values $p_1, p_2$ and their corresponding operating voltage values $v_1, v_2$. In other words, a power loss value (e.g., $p_{loss}$) is calculated e.g. using function (10) for all feasible combinations (i.e., using the combination of functions (11b)-(11f)) of the calculated power of the first string and second string (e.g., $p_1$ and $p_2$). In various embodiments, the acceptable combinations meeting the requirements of the predetermined criteria may be determined based on the functions (11b) - (11f) as previously described. In several embodiments, the predetermined criteria to be fulfilled for the one or more string-power combinations of the determined one or more discrete first and second string power values may comprises one or more constraints of the electricity distribution system configured for at least balancing a state of charge of the first and the second battery strings. In several embodiments, the one or more constraints of the electricity distribution system may comprise a respective battery capacity ($Q_1$, $Q_2$) of the first and the second battery strings. Further, the constraints may comprise a respective operating state of charge ($z_1$, $z_2$) (current state of charge of the batteries during operation) of the first and the second battery strings, and a respective minimum state of charge ($z_{min}$) of the first and the second battery strings corresponding to a fully discharged state ($Q_{empty1}$, $Q_{empty2}$) of the first and the second battery strings. In several embodiments, the processing circuitry may be further configured for determining the respective loss function for the load power value p based further on the estimated at least one parameter associated with the first and the second battery string, the efficiency parameter of the dual DC/DC converter 208, and the propulsion battery current of the battery pack. These parameters may e.g. be calculated by using the function (10) as previously explained.

The processing circuitry 11 is accordingly configured for comparing the determined respective loss functions for the one or more string-power combinations and further for selecting a string-power combination of the one or more string-power combinations having the smallest loss function value.

Stated differently, the calculated power loss values are compared and the combination of string powers (e.g., $p_1$ and $p_2$) that give the lowest loss of power (e.g., the lowest $p_{loss}$) is selected. When the string-power combination having the minimum relative loss compared to the other combinations is identified, the processing circuitry is further configured for providing, to the one or more first loads, the load power value p provided by the selected string-power combination. In other words, the calculated power ($p_1$) by the first string 102; 202 and the calculated power ($p_2$) by the second string 104; 204 returning the smallest power loss are distributed to the loads 110, 112 by the battery strings.

According to several embodiments and aspects herein, there is provided a computer-implemented method **300** of optimizing power delivery and distribution in an electricity distribution system 106 of a vehicle 1 having a battery pack. The battery pack comprises a first battery string 102; 202 and a second battery string 104; 204 each having a respective operating voltage as previously explained.

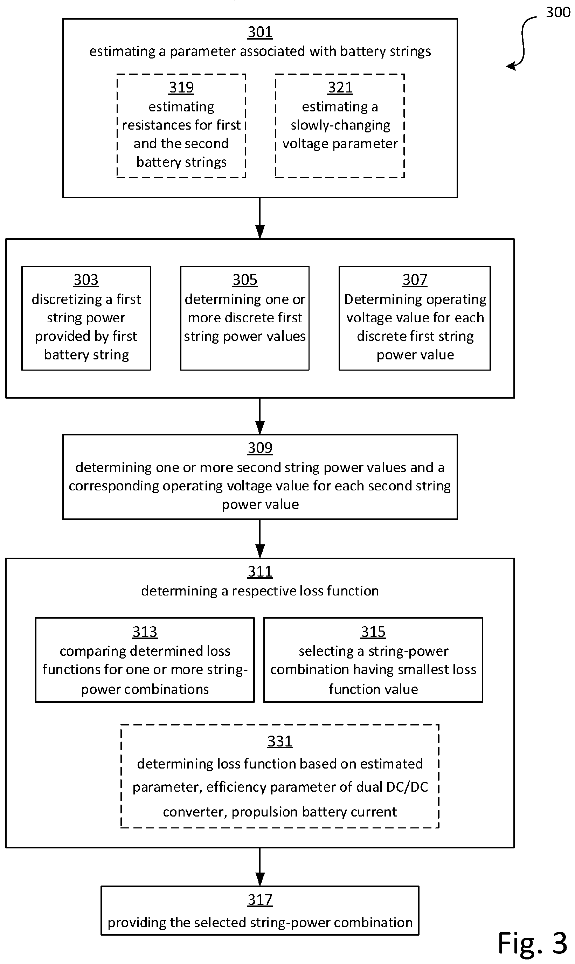

FIG. 3 shows a flowchart of the method **300** according to various aspects and embodiments of the present disclosure and with reference to the technology presented in FIGs. 1 and 2. The method **300** comprises estimating **301** a parameter associated with each of the first 102; 202 and the second 104; 204 battery string. The method further comprises discretizing **303** a respective first string power provided by the first battery string over a predetermined range of a load power value to be provided to one or more first loads, configured to operate at a respective load operating voltage, and thereby determining **305** one or more discrete first string power values. Further, the method comprises determining **307** a corresponding operating voltage value for each discrete first string power value, based at least partly on the estimated at least one parameter associated with the first battery string. The method further comprises determining **309** one or more second string power values and a corresponding operating voltage value for each second string power value provided by the second battery string based at least partly on the determined one or more discrete first string power values and their corresponding operating voltage values. For each string-power combination comprised in one or more string-power combinations of the determined one or more discrete first and second string power values fulfilling a predetermined criteria, the method further comprises determining **311** a respective loss function for the load power value, provided by that string-power combination, based at least partly on the determined one or more discrete first and second string power values and their corresponding operating voltage values. Even further, the method comprises comparing **313** the determined respective loss functions for the one or more string-power combinations and selecting **315** a string-power combination of the one or more string-power combinations having the smallest loss function value. The method further comprises providing **317,** to the one or more first loads, the load power value provided by the selected string-power combination.

In several embodiments herein, the method may further comprise estimating the parameter associated with each of the first and the second battery string by any one of estimating **319** respective resistances for each of the first and the second battery strings and by estimating **321** a slowly-changing voltage parameter of the respective operating voltages for each of the first and the second battery strings.

In several embodiments, each of the first and the second battery strings comprises one or more battery cells. Accordingly, estimating respective resistances for each of the first and the second battery strings may comprise estimating **323** a respective resistance of each battery cell comprised in each of the first and the second battery strings and determining **325** a sum of the estimated resistances of the one or more battery cells for each battery string. The method may further comprise estimating **327** the slowly-changing voltage parameters for the first and the second battery strings based on the estimated resistances of the first and the second battery strings and a propulsion battery current of the battery pack. In some embodiments, the corresponding operating voltage value for each discrete first string power value may be determined based further on the propulsion battery current of the battery pack.

In several exemplary embodiments and aspects, the electricity distribution system 106 further comprises a dual DC/DC converter 208 arranged in connection with the first and the second battery strings and configured to control a flow of string power from the first and the second battery strings provided at least to the one or more first and/or second loads 110, 112. Accordingly, the method may further comprise determining **329** the one or more second string power values and the corresponding operating voltage value for each second string power value based further on the estimated at least one parameter associated with the second battery string, an efficiency parameter of the dual DC/DC converter, and a propulsion battery current of the battery pack.

In several embodiments, the predetermined criteria to be fulfilled for the one or more string-power combinations of the determined one or more discrete first and second string power values may comprise one or more constraints of the electricity distribution system configured for at least balancing a state of charge of the first and the second battery strings. In several embodiments, the one or more constraints of the electricity distribution system may comprise a respective battery capacity of the first and the second battery strings, a respective operating state of charge of the first and the second battery strings, and a respective minimum state of charge of the first and the second battery strings corresponding to a fully discharged state of the first and the second battery strings.

In several exemplary embodiments and aspects herein, the method may further comprise determining **331** the respective loss function for the load power value based further on the estimated at least one parameter associated with the first and the second battery string, the efficiency parameter of the dual DC/DC converter, and the propulsion battery current of the battery pack.

Executable instructions for performing these functions and embodiments of the methods **300** are, optionally, included in a non-transitory computer-readable storage medium or other computer program product configured for execution by one or more processors e.g. one or more processors comprised in the controller 120 of the power management system 106 or in a control system of the vehicle.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," "embodiments," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be understood that the individual steps used in the methods of the present teachings may be performed in any order and/or simultaneously, as long as the teaching remains operable. Furthermore, it should be understood that the apparatus and methods of the present teachings can include any number, or all, of the described embodiments, as long as the teaching remains operable.

In embodiments, it should be understood the system and/or its components or subsystems can include computing devices, microprocessors, controllers, modules and other computer or computing devices, which can be any programmable device that accepts digital data as input, is configured to process the input according to instructions or algorithms, and provides results as outputs. In one embodiment, computing and other such devices discussed herein can be, comprise, contain or be coupled to a central processing unit (CPU) configured to carry out the instructions of a computer program. Computing and other such devices discussed herein are therefore configured to perform basic arithmetical, logical, and input/output operations.

In embodiments, the system or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

**Claims**

1. A computer-implemented method of optimizing power delivery in an electricity distribution system of a vehicle, the electricity distribution system comprising:

   a battery pack comprising a first battery string and a second battery string each having a respective operating voltage;
   wherein the method comprises:

      estimating a parameter associated with each of the first and the second battery string;
      discretizing a respective first string power provided by the first battery string over a predetermined range of a load power value to be provided to one or more first loads, configured to operate at a respective load operating voltage; thereby determining one or more discrete first string power values;

determining a corresponding operating voltage value for each discrete first string power value, based at least partly on the estimated at least one parameter associated with the first battery string;

determining one or more second string power values and a corresponding operating voltage value for each second string power value provided by the second battery string based at least partly on the determined one or more discrete first string power values and their corresponding operating voltage values;

for each string-power combination comprised in one or more string-power combinations of the determined one or more discrete first and second string power values fulfilling a predetermined criteria:

determining a respective loss function for the load power value, provided by that string-power combination, based at least partly on the determined one or more discrete first and second string power values and their corresponding operating voltage values;

comparing the determined respective loss functions for the one or more string-power combinations; and selecting a string-power combination of the one or more string-power combinations having the smallest loss function value;

providing, to the one or more first loads, the load power value provided by the selected string-power combination.

2. The method according to claim 1, wherein the method further comprises:
estimating the parameter associated with each of the first and the second battery string by any one of:

estimating respective resistances for each of the first and the second battery strings; and by estimating a slowly-changing voltage parameter of the respective operating voltages for each of the first and the second battery strings.

3. The method according to claim 2, wherein each of the first and the second battery strings comprises one or more battery cells, and wherein estimating respective resistances for each of the first and the second battery strings comprises:
estimating a respective resistance of each battery cell comprised in each of the first and the second battery strings and determining a sum of the estimated resistances of the one or more battery cells for each battery string; wherein the method further comprises:
estimating the slowly-changing voltage parameters for the first and the second battery strings based on the estimated resistances of the first and the second battery strings and a propulsion battery current of the battery pack.

4. The method according to any one of claims 1-3, wherein the corresponding operating voltage value for each discrete first string power value is determined based further on the propulsion battery current of the battery pack.

5. The method according to any one of claims 1-4, wherein the electricity distribution system further comprises:
a dual DC/DC converter arranged in connection with the first and the second battery strings and configured to control a flow of string power from the first and the second battery strings provided at least to the one or more first loads, wherein the method further comprises:
determining the one or more second string power values and the corresponding operating voltage value for each second string power value based further on the estimated at least one parameter associated with the second battery string, an efficiency parameter of the dual DC/DC converter, and a propulsion battery current of the battery pack.

6. The method according to any one of preceding claims, wherein the predetermined criteria to be fulfilled for the one or more string-power combinations of the determined one or more discrete first and second string power values comprises:
one or more constraints of the electricity distribution system configured for at least balancing a state of charge of the first and the second battery strings.

7. The method according to claim 6, wherein the one or more constraints of the electricity distribution system comprises:
a respective battery capacity of the first and the second battery strings, a respective operating state of charge of the first and the second battery strings, and a respective minimum state of charge of the first and the second battery strings corresponding to a fully discharged state of the first and the second battery strings.

8. The method according to any one of claims 5-7, wherein the method further comprises:
determining the respective loss function for the load power value based further on the estimated at least one parameter associated with the first and the second battery string, the efficiency parameter of the dual DC/DC converter, and the propulsion battery current of the battery pack.

9.  A computer-readable storage medium comprising instructions which, when executed by one or more processors of a computing device of a vehicle comprising an electricity distribution system, causes the computing device to carry out the method according to any one of the preceding claims.

10. A computer program product comprising instructions which, when the program is executed by one or more processors of a computing device of a vehicle comprising an electricity distribution system, causes the computing device to carry out the method according to any one of claims 1-8.

11. An electricity distribution system for a vehicle, the electricity distribution system comprising a battery pack comprising a first battery string and a second battery string each having a respective operating voltage, wherein the system further comprises processing circuitry configured for:

   estimating a parameter associated with each of the first and the second battery string;
   discretizing a respective first string power provided by the first battery string over a predetermined range of a load power value to be provided to one or more first loads, configured to operate at a respective load operating voltage; thereby determining one or more discrete first string power values;
   determining a corresponding operating voltage value for each discrete first string power value, based at least partly on the estimated at least one parameter associated with the first battery string;
   determining one or more second string power values and a corresponding operating voltage value for each second string power value provided by the second battery string based at least partly on the determined one or more discrete first string power values and their corresponding operating voltage values;
   for each string-power combination comprised in one or more string-power combinations of the determined one or more discrete first and second string power values fulfilling a predetermined criteria:

      determining a respective loss function for the load power value, provided by that string-power combination, based at least partly on the determined one or more discrete first and second string power values and their corresponding operating voltage values;
      comparing the determined respective loss functions for the one or more string-power combinations; and selecting a string-power combination of the one or more string-power combinations having the smallest loss function value;
      providing, to the one or more first loads, the load power value provided by the selected string-power combination.

12. The electricity distribution system according to claim 11, wherein the processing circuitry is configured for:
   estimating the parameter associated with each of the first and the second battery string by any one of:

      estimating respective resistances for each of the first and the second battery strings; and
      by estimating a slowly-changing voltage parameter of the respective operating voltages for each of the first and the second battery strings.

13. The electricity distribution system according to claim 12, wherein each of the first and the second battery strings comprises one or more battery cells, and wherein the processing circuitry is further configured for estimating respective resistances for each of the first and the second battery strings by estimating a respective resistance of each battery cell comprised in each of the first and the second battery strings and determining a sum of the estimated resistances of the one or more battery cells for each battery string;
   wherein the processing circuitry is further configured for:
   estimating the slowly-changing voltage parameters for the first and the second battery strings based on the estimated resistances of the first and the second battery strings and a propulsion battery current of the battery pack.

14. The electricity distribution system according to any one of claims 11 - 13, wherein the electricity distribution system further comprises:
   a dual DC/DC converter arranged in connection with the first and the second battery strings and configured to control a flow of string power from the first and the second battery strings provided at least to the one or more first loads, and wherein the processing circuitry is further configured for:
   determining the one or more second string power values and the corresponding operating voltage value for each second string power value based further on the estimated at least one parameter associated with the second battery string, an efficiency parameter of the dual DC/DC converter, and a propulsion battery current of the battery pack.

15. A vehicle comprising an electricity distribution system according to any one of claims 11 -14.

102

104

First string

Second string

Electrical Distribution System

106

High-voltage
(Drivetrain)

Low-voltage systems

110

112

Fig. 1

Fig. 2

300

**301**
estimating a parameter associated with battery strings

**319**
estimating resistances for first and the second battery strings

**321**
estimating a slowly-changing voltage parameter

**303**
discretizing a first string power provided by first battery string

**305**
determining one or more discrete first string power values

**307**
Determining operating voltage value for each discrete first string power value

**309**
determining one or more second string power values and a corresponding operating voltage value for each second string power value

**311**
determining a respective loss function

**313**
comparing determined loss functions for one or more string-power combinations

**315**
selecting a string-power combination having smallest loss function value

**331**
determining loss function based on estimated parameter, efficiency parameter of dual DC/DC converter, propulsion battery current

**317**
providing the selected string-power combination

Fig. 3

Fig. 4

Europäisches Patentamt

European Patent Office

Office européen des brevets

# EUROPEAN SEARCH REPORT

**Application Number**

EP 23 18 0456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 111886 A (TOYOTA MOTOR CORP) 20 June 2016 (2016-06-20) * paragraphs [0018], [0057] - [0059], [0063] - [0064]; figure 1 * | 1-15 | INV. B60L58/19 B60L58/21 B60L58/22 |
| A | US 2022/149454 A1 (WASSMUR ROBERT [SE] ET AL) 12 May 2022 (2022-05-12) * figure 1 * | 1 | |
| X | US 8 330 420 B2 (KIM HAHNSANG [US]; SHIN KANG G [US]; UNIV MICHIGAN [US]) 11 December 2012 (2012-12-11) * column 4, line 29 - column 12, line 45; figure 1 * | 1 | |

**TECHNICAL FIELDS SEARCHED (IPC)**

B60L

The present search report has been drawn up for all claims

| Place of search | Date of completion of the search | Examiner |
|---|---|---|
| The Hague | 20 November 2023 | Bellatalla, Filippo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 0456

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2023

| Patent document cited in search report | | | Publication date | Patent family member(s) | | | Publication date |
|---|---|---|---|---|---|---|---|
| JP 2016111886 | A | | 20-06-2016 | NONE | | | |
| US 2022149454 | A1 | | 12-05-2022 | CN | 116868470 | A | 10-10-2023 |
| | | | | EP | 4244949 | A1 | 20-09-2023 |
| | | | | US | 2022149454 | A1 | 12-05-2022 |
| | | | | WO | 2022104372 | A1 | 19-05-2022 |
| US 8330420 | B2 | | 11-12-2012 | EP | 2556579 | A2 | 13-02-2013 |
| | | | | JP | 2013526242 | A | 20-06-2013 |
| | | | | JP | 2016146748 | A | 12-08-2016 |
| | | | | KR | 20130094703 | A | 26-08-2013 |
| | | | | US | 2010261048 | A1 | 14-10-2010 |
| | | | | WO | 2011127251 | A2 | 13-10-2011 |

EPO FORM P0459

For more details about this annex : see Official Journal of the European Patent Office, No. 12/82